(19) Europäisches Patentamt
European Patent Office
Office européen des brevets

(11) EP 1 840 144 A1

(12) EUROPEAN PATENT APPLICATION

(43) Date of publication:
**03.10.2007 Bulletin 2007/40**

(51) Int Cl.:
***C08G 18/18*** *(2006.01)*

(21) Application number: **07005828.4**

(22) Date of filing: **21.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.03.2006 US 389771**

(71) Applicant: **AIR PRODUCTS AND CHEMICALS, INC.**
**Allentown, PA 18195-1501 (US)**

(72) Inventors:
- **Allen, Robert Arnold, Jr.**
  **PA 18032 (US)**
- **James, Douglas Tobias**
  **PA 18034 (US)**
- **Bell, Andrea Karen**
  **PA 19465 (US)**

(74) Representative: **Kador & Partner**
**Corneliusstrasse 15**
**80469 München (DE)**

(54) **Crosslinkers for minimizing deterioration of polyurethane foams**

(57) A composition for making a polyurethane foam includes a non-fugitive tertiary amine urethane catalyst and amidoamine and/or imidazoline crosslinking additives. Foams prepared from the reaction of a polyol and an organic isocyanate in the presence of these ingredients show excellent resistance to deterioration of physical properties upon humid ageing.

EP 1 840 144 A1

## Description

### FIELD OF THE INVENTION

This invention relates to polyurethane foams. More particularly, it relates to crosslinker additives for reducing the deterioration of polyurethane foams under humid ageing conditions.

### BACKGROUND OF THE INVENTION

Polyurethane foams are widely known and used in automotive, housing and other industries. Such foams are produced by reaction of a polyisocyanate with a polyol in the presence of a catalyst, typically a tertiary amine. Unfortunately, tertiary amine catalysts are usually malodorous and offensive, and many have high volatility due to their low molecular weight. To overcome this problem, polyurethane manufacturers have sought to achieve near zero amine emissions by using "non-fugitive" tertiary amine catalysts, which remain in the foam during and after formation. The retention is typically due to either low volatility or to reaction with other components of the composition. The latter variety typically remain in the foam due to the presence of an isocyanate-reactive group such as a primary or secondary amine, a hydroxyl, or other reactive group that ties them to the foam. Whether due to low volatility or by reaction with the polyurethane, use of non-fugitive tertiary amine catalysts greatly reduces amine emissions from the polyurethane, but has the unfortunate effect of reducing the stability of the polyurethane under humid ageing conditions. For example, foams based on 4,4'-diphenylmethane diisocyanate (MDI) may barely meet typical specification requirements after humid ageing, and foams based on toluene diisocyanate (TDI) may completely fail to meet specifications. In general, foams made with any tertiary amine catalyst that remains in the foam tend to exhibit poor humid aged physical properties. Such deterioration may be so severe as to make the foams unsuitable for use, for instance in automotive applications. Therefore, it would be desirable to overcome performance deterioration in polyurethane foams made with non-fugitive tertiary amine catalysts.

### SUMMARY OF THE INVENTION

In one aspect, the invention provides a method of making a polyurethane foam. The method includes combining a polyol component, an organic isocyanate, a non-fugitive tertiary amine urethane catalyst, and a particular crosslinking additive composition. In this aspect the crosslinking additive composition comprises one or more compounds of the following formulas A and/or B:
an amidoamine of formula A:

$$(RCO)N(R')-[(CH_2)_m-NR']_n-R' \qquad A$$

and/or
an imidazoline of formula B:

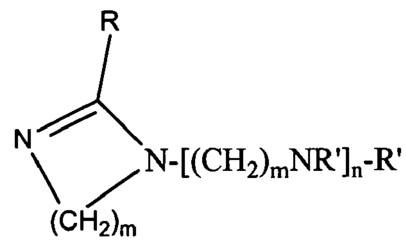

B

in which
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl, alkylaryl group or, when n > 1 in formula B, a group the formula:

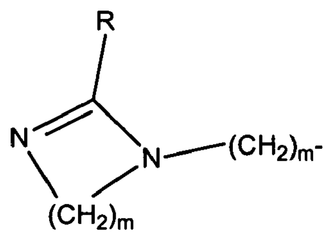

;

m is 2 or 3; and

n is an integer from 1 to 10.

In another aspect, the invention provides a composition including a non-fugitive tertiary amine urethane catalyst and at least one crosslinker according to formulas (A) and/or (B) as defined above. A polyol component may be included in the composition, which composition optionally may also include one or more blowing agents, additional crosslinkers, additional urethane catalysts, and surfactants.

In yet another aspect, the crosslinking additive composition for use in the above inventive aspects comprises the reaction product of a C1-C36 carboxylic acid and a polyethylene polyamine or polypropylene polyamine.

DETAILED DESCRIPTION OF THE INVENTION

The invention relates to novel crosslinking additive compositions for making polyurethane foams. The compositions include at least one compound, shown below as formulas A and B, or the compositions can be obtained by the reaction of a C1-C36 carboxylic acid with a polyethylene or polypropylene polyamine. The applicants have found that the inclusion of one or more of these crosslinking additives serves to reduce or eliminate deterioration under humid ageing conditions of polyurethane foams made using non-fugitive tertiary amine urethane catalysts. The crosslinking additive compounds may be used in conjunction with conventional non-fugitive tertiary amine catalyst compositions under otherwise conventional conditions to make polyurethane foams, i.e., making foams that contain tertiary amine functionality resulting from the use of such catalysts. The foams are made by combining at least one isocyanate compound, at least one polyol compound, and at least one non-fugitive tertiary amine catalyst composition in the presence of the defined crosslinking additive composition. A blowing agent is usually included, but need not be.

As used herein, the term "crosslinking additive" means a compound or mixture of compounds according to formula (A) and/or formula (B) below or the reaction product of a C1-C36 carboxylic acid with a polyethylene or polypropylene polyamine.

Suitable for use in the invention would be amidoamines of formula A:

$$(RCO)N(R')\text{-}[(CH_2)_m\text{-}NR']_n\text{-}R' \qquad A$$

in which
R is hydrogen, a C1-C35 alkyl, substituted alkyl, alkenyl, substituted alkenyl, aryl, substituted aryl or alkylaryl group; preferably a C14-C22 fatty alkyl or alkenyl group;
R' each independently is RCO-, a hydrogen atom, a C1-C36 alkyl, substituted alkyl, alkenyl, substituted alkenyl, aryl, substituted aryl or alkylaryl group; preferably hydrogen or a C1-C4 alkyl group;
m is 2 or 3; and
n is an integer from 1 to 10.

It is preferred that the crosslinking amidoamine compounds have the following formula A1:

$$(RCO)N(H)\text{-}[(CH_2)_m\text{-}NH]_n\text{-}R' \qquad A1$$

where
R is a C6-C17 alkyl, substituted alkyl, alkenyl, substituted alkenyl, aryl, substituted aryl or alkylaryl group; in particular C16-C17 fatty alkyl or alkenyl groups;
$R^1$ is a hydrogen atom or a RCO- acyl group; especially hydrogen;
m is 2 or 3; especially 2; and
n is an integer from 1 to 6; especially 2 to 5.

Another crosslinking compound suitable for use in the invention would be an imidazoline of formula B:

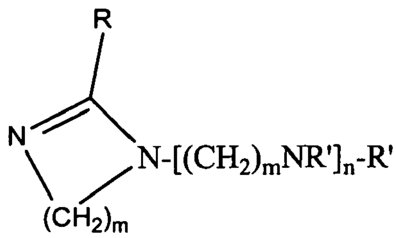

B

in which
R is a hydrogen, a C1-C35 alkyl, substituted alkyl, alkenyl, substituted alkenyl, aryl, substituted aryl or alkylaryl group; preferably a C14-C22 fatty alkyl or alkenyl group;
R' independently is an RCO- acyl group, hydrogen, a C1-C36 alkyl, substituted alkyl, alkenyl, substituted alkenyl, aryl, substituted aryl or alkylaryl group; preferably hydrogen or a C1-C4 alkyl group; or when n > 1 may be a group the formula:

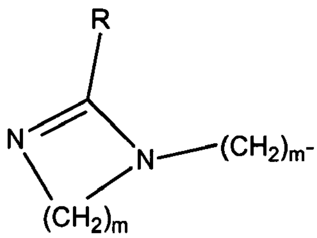

;

m is 2 or 3; and

n is an integer from 1 to 10.

Preferred crosslinking compounds are imidazolines of the following formula B1:

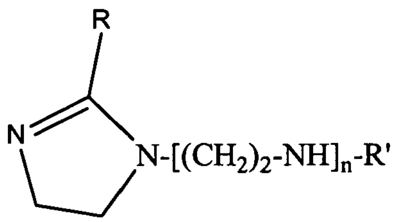

B1

where
R is hydrogen or a C6-C17 alkyl, substituted alkyl, alkenyl, substituted alkenyl, aryl, substituted aryl or alkylaryl group; in particular C16-C17 fatty alkyl and alkenyl groups;
R' is hydrogen, an RCO- acyl group or an imidazole group of the formula:

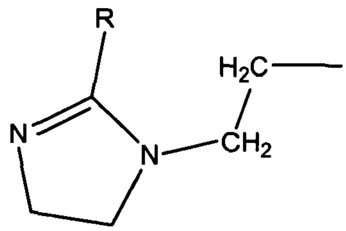

and

n is an integer from 1 to 6, in particular 2 to 5, and when n = 1 then R' represents hydrogen.

The crosslinking additives are prepared by reacting a carboxylic acid $RCO_2H$ and a polyamine $H_2N-[(CH_2)_m-NH_2]_n$ in the appropriate molar ratios at elevated temperatures of from 80°C to 300°C, preferably 100°C to 200°C, with water being driven off as is well known. The reaction may be performed using a solvent suitable for azeotropically removing water but is typically not necessary. The manufacture of amidoamines and imidazolines is well known in the epoxy curative art as evidenced by both patent literature and the open literature. The carboxylic acid : amine reactant molar ratio may range from about 2:1 to 0.8:1; typically 1.3:1 to 1:1, and preferably slightly greater than equimolar amounts of the reactants, for example about 1.05 to 1.1:1 acid : polyamine. U.S. 6,258,920 also teaches the preparation of suitable amidoamines.

Examples of carboxylic acids include, but are not limited to, formic acid, acetic acid, propionic acid, butanoic acid, pentanoic acid, hexanoic acid, heptanoic acid, octanoic acid, nonanoic acid, decanoic acid, undecanoic acid, dodecanoic acid, tetradecanoic acid, hexadecanoic acid, octadecanoic acid, coconut oil fatty acids, ricinoleic acid, tall oil fatty acids, oleic acid, caproic acid, caprylic acid, capric acid, lauric acid, myristic acid, palmitic acid, stearic acid, oleic acid, linoleic acid, linolenic acid, and their aliphatic or aromatic substituted derivatives such as 9- and 10- phenylstearic and related structures.

Advantageously fatty acids are used in the present invention and include those composed primarily of C14 to C22 monocarboxylic acids containing from 0 to 4 units of unsaturation. Preferred fatty acids are tall oil fatty acid (TOFA), soya fatty acid and coconut oil fatty acid.

In another aspect and for purposes of this invention, "fatty acids" are meant to include "dimer acids". Dimer acids are typically made by the thermal condensation of C18 fatty acids. Thus, dimer acids may replace some or all of the fatty monocarboxylic acids in the reaction with polyethylene or polypropylene polyamines to make the crosslinking additive compositions used in this invention. In such case, the use of dimer acids affords polyamides as is well known in the epoxy curative art.

Suitable monocarboxylic acids for making the crosslinking additives also include aromatic monocarboxylic acids such as benzoic acid, salicylic acid and naphthoic acid with benzoic acid being preferred. Aromatic dicarboxylic acids such as isophthalic acid and terephthalic acid may be blended with the monocarboxylic acid in a minor amount. The aromatic carboxylic acids may be blended with the alkyl and alkenyl carboxylic acids.

Examples of suitable polyamines include, but are not limited to, ethylenediamine (EDA), diethylenetriamine (DETA), triethylenetetramine (TETA), tetraethylenepentamine (TEPA), and pentaethylenehexamine (PEHA), hexaethyleneheptamine, dipropylenetriamine, tripropylenetetramine, tetrapropylenepentamine, pentapropylenehexamine, hexapropyleneheptamine and the like. DETA, TETA and TEPA are especially desired.

Unless otherwise specified, alkyl and alkenyl groups described herein are intended to include all structural isomers, linear or branched, of a given structure; for example, all enantiomers and all diasteriomers are included within this definition. As an example, unless otherwise specified, the term propyl is meant to include n-propyl and iso-propyl, while the term butyl is meant to include n-butyl, iso-butyl, *t*-butyl, sec-butyl, and so forth. Similarly, substituted alkyl, alkenyl, aryl, and alkylaryl groups described herein are intended to include substituted analogs of a given structure. For example, the substituents on alkyl, alkenyl, aryl, and alkylaryl groups can include, but are not limited to, halides; hydroxyl groups; amino groups; alkoxy, alkylamino, or dialkylamino groups having up to 10 carbon atoms; or combinations thereof.

Non-limiting examples of alkyl groups which can be present in the monocarboxylic acid include methyl, ethyl, propyl, butyl, pentyl, hexyl, heptyl, octyl, nonyl, or decyl, and the like. Examples of alkenyl groups within the scope of the present invention include, but are not limited to, ethenyl, propenyl, butenyl, pentenyl, hexenyl, heptenyl, octenyl, nonenyl, decenyl, and the like. Aryl and alkylaryl (alkylaryl is defined as an aryl-substituted alkyl or arylalkyl) groups include phenyl, alkyl-substituted phenyl, naphthyl, alkyl-substituted naphthyl, and the like. For example, non-limiting examples of aryl and alkylaryl groups useful in the present invention include, but are not limited to, phenyl, tolyl, benzyl, dimethylphenyl, trimethylphenyl, phenylethyl, phenylpropyl, phenylbutyl, propyl-2-phenylethyl, and the like.

The crosslinker composition can improve foam hardness in conventional and high resilience slabstock foams as well as flexible molded polyurethane foam. The crosslinker composition can also improve the chemical stability of the polyurethane as evidenced by the physical properties measurement of foams that were subjected to humid ageing. The invention can be used to produce humid aged stable TDI-based foams made with non-fugitive, or non-emissive, tertiary amine catalysts, i.e. catalysts characterized by very low vapor pressures or by the presence of an isocyanate reactive group.

The amount of crosslinking additive in the polyurethane foam composition should typically be about 0.1 to 5 parts per hundred parts polyol on a weight basis (pphp). More typically, the amount will be 0.2 to 3 pphp, and most typically 0.4 to 2 pphp.

Preparation of Foams

Foams of any of the various types known in the art may be made using the methods of this invention, using typical polyurethane formulations to which have been added one or more crosslinking additives according to the invention. For example, flexible polyurethane foams with the excellent aging characteristics described herein will typically comprise the components shown below in Table 1, in the amounts indicated. The components shown in Table 1 will be discussed in detail later below.

TABLE 1: Polyurethane Components

| **Component** | **Parts by Weight** |
|---|---|
| Base Polyol | 20-100 |
| Polymer polyol | 0-80 |
| Silicone surfactant | 0.5-10 |
| Blowing agent | 2-4.5 |
| Crosslinker | 0.5-2 |
| Catalyst | 0.25-10 |
| Polyisocyanate | To provide NCO index = 70-115 |

The amount of polyisocyanate used in polyurethane formulations according to the invention is not limited, but it will typically be within those ranges known to those of skill in the art. An exemplary range is given in the above table, indicated by reference to "NCO Index" (isocyanate index). As is known in the art, the NCO index is defined as the number of equivalents of isocyanate, divided by the total number of equivalents of active hydrogen, multiplied by 100. The NCO index is represented by the following formula.

$$\text{NCO index} = [\text{NCO}/(\text{OH}+\text{NH})]\text{X}100$$

Flexible foams typically use copolymer polyols as part of the overall polyol content in the foam composition, along with base polyols of about 4000-5000 weight average molecular weight and hydroxyl number of about 28-35. Base polyols and copolymer polyols will be described in detail later herein.

In some embodiments of the invention, the catalyst and the crosslinking additive may be combined into a package, optionally with one or more polyols, including for example polyether polyols and polyester polyols, and optionally with one or more blowing agents and/or other additives commonly used in polyurethane formation. Examples of these other optional components are listed below, and they do not affect the basic nature of the invention. Such mixtures may subsequently be combined with an organic isocyanate to form a polyurethane foam, again optionally in the presence of other additives known in the art.

In addition to making flexible foams, the invention may also be used to prepare semi-flexible foams, such as are commonly utilized for many applications in the automotive industry (e.g., instrument panels and interior trims).

Although specific exemplary types of polyurethane foams are discussed above and elsewhere herein, it is to be understood that polyurethane foams of any type may be prepared according to the invention.

Catalysts

The catalyst in the compositions of the present invention comprises a non-fugitive tertiary amine. As used herein, the term "non-fugitive tertiary amine" refers to a tertiary amine that also comprises an isocyanate-reactive group such as a primary amine, secondary amine, hydroxyl group, amide or urea, or a tertiary amine that has a high boiling point (typically above 120°C). In either case, the result is that some or all of the catalyst remains in the foam. As used herein, reference to a tertiary amine catalyst "remaining in the foam" includes catalyst that remains in any form, whether or not it has reacted with any of the other components in the foam or its starting materials.

Non-fugitive tertiary amine catalysts include both gelling and blowing catalysts. Exemplary gelling catalysts include N,N-bis(3-dimethylamino-propyl) N-isopropanolamine; N,N-dimethylaminoethyl-N'-methyl ethanolamine; N,N, N'-trimethylaminopropyl ethanolamine; N,N-dimethylethanolamine; N,N-dimethyl-N',N'-2-hydroxy(propyl)-1,3-propylenediamine; dimethylaminopropylamine; (N,N-dimethylaminoethoxy)ethanol; methylhydroxyethylpiperazine, bis(N,N-dimethyl-3-aminopropyl)amine; N,N-dimethylaminopropyl urea; N,N'-bis(3-dimethylaminopropyl); bis(dimethylamino)-2-propanol; N-(3-aminopropyl)imidazole; N-(2-hydroxypropyl)imidazole; and N-(2-hydroxyethyl) imidazole.

Exemplary non-fugitive blowing catalysts include 2-[N-(dimethylaminoethoxyethyl)-N-methylamino]ethanol; dimethylaminoethoxyethanol; N,N,N'-trimethyl-N'-3-aminopropyl-bis(aminoethyl) ether; and N,N,N'-trimethyl-N'-aminopropyl-bis(aminoethyl) ether.

The catalyst may also comprise, in addition to non-fugitive tertiary amines, ones that are highly volatile and not isocyanate-reactive. Suitable volatile gelling catalysts may include, for example, triethylenediamine. Suitable volatile blowing catalysts include, for example, bis-dimethylaminoethyl ether, as well as pentamethyldiethylenetriamine and related compositions; higher permethylated polyamines; 2-[N-(dimethylaminoethoxyethyl)-N-methylamino]ethanol and related structures; alkoxylated polyamines; imidazoleboron compositions; or amino propyl-bis(amino-ethyl)ether compositions. The catalyst compositions may also include other components, for example transition metal catalysts such as organotin compounds, for example when the desired polyurethane foam is a flexible slab stock.

Typically, the loading of non-fugitive tertiary amine catalyst(s) for making a foam according to the invention will be in the range of 0.1 to 20 pphp, more typically 0.1 to 10 pphp, and most typically 0.1 to 5 pphp. However, any effective amount may be used. The term "pphp" means parts per hundred parts polyol.

Organic Isocyanates

Suitable organic isocyanate compounds include, but are not limited to, hexamethylene diisocyanate (HDI), phenylene diisocyanate (PDI), toluene diisocyanate (TDI), and 4,4'-diphenylmethane diisocyanate (MDI). In one aspect of the invention, 2,4-TDI, 2,6-TDI, or any mixture thereof is used to produce polyurethane foams. Other suitable isocyanate compounds are diisocyanate mixtures known commercially as "crude MDI." One example is marketed by Dow Chemical Company under the name PAPI, and contains about 60% of 4,4'-diphenylmethane diisocyanate along with other isomeric and analogous higher polyisocyanates.

Also suitable are "prepolymers" of these isocyanate compounds, comprising a partially pre-reacted mixture of a polyisocyanate and a polyether or polyester polyol to convert one or more hydroxyls on the polyester polyol to substituted carbamate groups. Suitable prepolymers derived from polyether and polyester polyols are well known in the art.

Polyol Component

Polyurethanes are produced by the reaction of organic isocyanates with the hydroxyl groups in a polyol, typically a mixture of polyols. The polyol component of the reaction mixture includes at least a main, or "base" polyol. Base polyols suitable for use in the invention include, as nonlimiting examples, polyether and polyester polyols. The polyalkylene ether polyol includes the poly(alkyleneoxide) polymers such as poly(ethyleneoxide) and poly(propyleneoxide) polymers and copolymers with terminal hydroxyl groups derived from polyhydric compounds, including diols and triols, These include, but are not limited to, ethylene glycol, propylene glycol, 1,3-butane diol, 1,4-butane diol, 1,6-hexane diol, neopentyl glycol, diethylene glycol, dipropylene glycol, pentaerythritol, glycerol, diglycerol, trimethylol propane, cyclohexane diol, and sugars such as sucrose and like low molecular weight polyols.

Amine polyether polyols can be used in the present invention. These can be prepared when an amine such as, for example, ethylenediamine, diethylenetriamine, tolylenediamine, diphenylmethanediamine, or triethanolamine is reacted with ethylene oxide or propylene oxide.

In another aspect of the present invention, a single high molecular weight polyether polyol, or a mixture of high molecular weight polyether polyols, such as mixtures of different multifunctional materials and/or different molecular weight or different chemical composition materials can be used.

In yet another aspect of the present invention, polyester polyols can be used, including those produced when a dicarboxylic acid is reacted with an excess of a diol. Non-limiting examples include adipic acid or phthalic acid or

phthalic anhydride reacting with ethylene glycol or butanediol. Polyols useful in the present invention can be produced by reacting a lactone with an excess of a diol, for example, caprolactone reacted with propylene glycol. In a further aspect, active hydrogen-containing compounds such as polyester polyols and polyether polyols, and combinations thereof, are useful in the present invention.

In addition to the base polyols described above, or instead of them, materials commonly referred to as "copolymer polyols" may be included in a polyol component for use according to the invention. Copolymer polyols may be used in polyurethane foams to increase the resistance of the foam to deformation, for example to improve the load-bearing properties of the foam. Depending upon the load-bearing requirements for the polyurethane foam, copolymer polyols may comprise from 0 to about 80 percent by weight of the total polyol content. Examples of copolymer polyols include, but are not limited to, graft polyols and polyurea modified polyols, both of which are known in the art and are commercially available.

Blowing Agents

Polyurethane foam production may be aided by the inclusion of a blowing agent to produce voids in the polyurethane matrix during polymerization. Any blowing agent known in the art may be used. Suitable blowing agents include compounds with low boiling points which are vaporized during the exothermic polymerization reaction. Such blowing agents are generally inert and therefore do not decompose or react during the polymerization reaction. Examples of inert blowing agents include, but are not limited to, carbon dioxide, chlorofluorocarbons, hydrogenated fluorocarbons, hydrogenated chlorofluorocarbons, acetone, and low-boiling hydrocarbons such as cyclopentane, isopentane, n-pentane, and their mixtures. Other suitable blowing agents include compounds, for example water, that react with isocyanate compounds to produce a gas.

Other Optional Components

A variety of other ingredients may be included in the formulations for making foams according to the invention. Examples of optional components include, but are not limited to, cell stabilizers, other crosslinking agents, chain extenders, pigments, fillers, flame retardants, auxiliary urethane gelling catalysts, auxiliary urethane blowing catalysts, transition metal catalysts, and combinations of any of these.

Practice of this invention may allow polyurethane manufacturers to realize one or more advantages. These may include a) use of a relatively inexpensive and readily available raw material (TDI) for flex-molded foams while obtaining low or no amine emissions; b) ability to use processing conditions similar to those already in use; c) avoidance in many cases of significant formulation changes (other than addition of the crosslinking additive) because the process can use conventional non-fugitive catalysts; d) use of raw materials well known by the industry; and e) excellent physical properties measured at ambient conditions before and after humid ageing.

In the following examples TDI based polyurethane foam formulations were used to evaluate crosslinking additives using conventional tertiary amine catalysts (fugitive or emissive) and reactive tertiary amine catalysts (nonfugitive or non-emissive) in free-rise and molded foams. All foams were tested in accordance to ASTM 3574, ISO 3386 -1 Halls, DIN 53571. The automotive test methodologies for Daimler Benz (DB) and Volkswagen (VW) were utilized to evaluate humid and heat aged load loss conditions.

Handmix Free-Rise Foams

Formulations were blended together for approximately 10 minutes using a mechanical mixer equipped with a 7.6 cm diameter high shear mixing blade, rotating at 5000 rpm. Premixed formulations were maintained at 23 ± 1 °C using a low temperature incubator. Mondur TD-80 (an 80/20 2,4/2,6 isomer blend of TDI) was added to the premix at the correct stoichiometric amount for the reported index of each foam. The mixture was blended together with Premier Mill Corporation Series 2000, Model 89, and dispersator for approximately five seconds. The foaming mixture was transferred to an Imperial Bondware #GDR-170 paper bucket and allowed to free rise while data was recorded.

Machine Molded Foam

Machine runs for the flexible molded foam were conducted on a Hi Tech Sure Shot MHR-50, cylinder displacement series and high-pressure machine. Fresh premixes, consisting of the appropriate polyols, water, crosslinker, surfactants and catalysts for each formulation were charged to the machine. Mondur TD-80 was used throughout the entire study. All chemical temperatures were held at 23 ± 2°C via the machine's internal temperature control units. Foam pours were made into an isothermally controlled, heated aluminum mold maintained at 63 ± 2°C. The mold was a typical physical property tool designed with internal dimensions of 40.6 cm x 40.6 cm x 10.2 cm. The mold has five vents, each

approximately 1.5 mm in diameter, centered in each corner 10.0 cm from each edge and the geometric center of the lid. The mold was sprayed with a solvent-based release agent, prior to every pour and allowed to dry for one minute before pouring. The foam premix was puddle poured into the center of the mold with a wet chemical charge weight capable of completely filling the mold and obtaining the desired core densities reported. Minimum fill requirements were established for each formulation evaluated. The foam article was demolded at 240 seconds (4 minutes) after the initial pour (detailed in next paragraph). Upon demold, the foam was placed through a mechanical crusher or tested for Force-to-Crush (FTC) measurements (detailed below).

All physical property foams in each catalyst set were mechanically crushed 1 minute after demold using a Black Brothers Roller crusher set to a gap of 2.54 cm. Crushing was conducted three times on each part, rotating the foam 90 degrees after each pass through the rollers. All parts produced for physical testing were allowed to condition for at least seven days in a constant temperature and humidity room (23 ± 2°C, 50 ± 2% relative humidity).

Three to four physical property parts were produced for any given set of conditions. Five test specimens were die-cut from each pad and evaluated for each physical property listed in Table 3 and 4. All results were included in calculating averages. Each test was conducted as specified in ASTM D-3574.

FTC measurements were conducted 45 seconds after demold. The pad was removed from the mold, weighed and placed in the FTC apparatus. The force detection device is equipped with a 2.2 kg capacity pressure transducer mounted between the 323 $cm^2$ circular plate cross head and the drive shaft. The actual force is shown on a digital display. This device mimics the ASTM D-3574, Indentation Force Deflection Test and provides a numerical value of freshly demolded foam's initial hardness or softness. The pad was compressed to 50 percent of its original thickness at a cross-head velocity of 275mm per minute with the force necessary to achieve the highest compression cycle recorded in Newtons. Ten compression cycles were completed. A cycle takes approximately 30 seconds to complete.

Hot Cure Test

Foams prepared in the normal manner are dispensed into a 38.1 x 38.1 x 6.35 cm thick mold. The mold is closed and clamped, and the foam is cured according to the desired cycle. Upon demold the foam is immediately given a roller crush at a ½ inch gap and placed beneath the indenter jig. The four indenter feet are adjusted to regionally deflect the foam part to 2.54cm, 1.91 cm, 1.27cm, and 0.64cm residual thickness. Four replicate pads are prepared and tested at varying times and the data is collected and entered in the following form:

Cure Data Form

| Deflection to: | 2.54 cm | 1.91 cm | 1.27 cm | 0.605cm |
|---|---|---|---|---|
| Time (sec) | | | | |
| 15 | A | B | C | D |
| 30 | E | F | G | H |
| 45 | I | J | K | L |
| 60 | M | N | O | P |

where A, B, C, etc. are the minimum residual thickness remaining at each test location. The undepressed thickness of the foam is also recorded. After deflection, the pads are allowed to recover for a minimum of 4 hours before cutting and measurement of residual thickness in each test area. The percent compression set values are then calculated for each test condition and a total cumulative % Hot Set number calculated. The amount or degree of hot set is dependent upon both severity of regional deflection and the amount of time that deflection is held. For instance, shallow deflections for long periods of time or severe deflections for short periods usually result in little, if any, hot set. However as both the degree and time of the deflection increase, hot set also increases in magnitude. This response may be attributed to the increasing probability that residual primary reactions in the foam core are more likely to occur as both time and degree of deflection increase. As a consequence, the amount of foam set increases. The individual percent values are calculated according to the following equation:

$$\%\ \text{hot set} = (T_O - T_R)/T_O \times 100$$

where $T_O$ is the thickness of an undeflected area of the pad and $T_R$ is the residual thickness for the test area

being considered.

EXAMPLES

Following is a glossary of materials used in the Examples.

| **Abbreviation** | **Compound** |
|---|---|
| DABCO 33-LV® | diazabicyclooctane |
| DABCO® BL-11 | bis-dimethylaminoethyl ether |
| Non-fugitive 1 | mixture of N,N,N'-trimethyl-N'-hydroxyethyl-bisaminoethyl ether and dimethylaminopropyl ureas |
| Non-fugitive 2 | N-[2-[2-(dimethylamine) ethoxy]ethyl]-N-methyl-1,3-propanediamine |
| Non-fugitive 3 | mixture of mono and bis-dimethylaminopropyl urea |
| DEOA | diethanolamine |
| Amidoamine 1 | Reaction product of tall oil fatty acids (TOFA) with tetraethylenepentamine (TEPA) comprising amidoamine and imidazoline at -50:50 wt. |
| Amidoamine 2 | Reaction product of tall oil fatty acids (TOFA) and some terephthalic acid (TA) with triethylenetetramine (TETA) comprising 70% amidoamine, 20% being a mixture of TA and polyamides of TETA and ~10% free TETA |

EXAMPLE 1

The polyurethane foams made with the non fugitive catalysts are shown in column 1 B and the results clearly shows significant deterioration when this product is subjected to humid aged conditions (Daimler Benz and Volkswagen testing procedures). Column 1A shows the physical properties of polyurethane foams made with the emissive standard. The physical property of foam for this case (1A) shows much better performance that those observed for the non-fugitive catalysts case. This illustrates the limitation of using non-fugitive or non emissive catalysts packages where foam has no amine emission but at the expense of physical properties. Column 1C illustrates the results obtained when replacing the standard crosslinker DEOA with a composition of the invention (Amidoamine 1). Significant improvements in HALL, HACS, humid aged tensile and humid aged elongation are observed in this case showing the benefit of using this composition in the preparation of non-amine emissive polyurethane foams. Column 1 D with experimental crosslinker of product 2 in place of DEOA, also improves polyurethane physical properties.

LOW DENSITY FORMULATION

| | |
|---|---|
| Index (Mondur TD80) | 100 |
| Density, Kg/$m^3$ | 31.5 |
| Conventional Polyol, pphp | 72.0 |
| SAN Polyol, pphp | 28.0 |
| DC 5169, pphp | 0.60 |
| DC 5164, pphp | 0.20 |
| Water | 4.10 |

FOAM DATA ANALYSIS

| Formulation Example | **1A** | **1B** | **1C** | **1D** |
|---|---|---|---|---|
| Index | 100 | 100 | 100 | 100 |
| Density, Kg/$m^3$ | 31.5 | 31.5 | 31.5 | 31.5 |
| 33 LV* | 0.32 | - | - | - |

(continued)

| Formulation Example | **1A** | **1B** | **1C** | **1D** |
|---|---|---|---|---|
| BL 11* | 0.08 | - | - | - |
| Non-fugitive 3* | - | 0.38 | 0.38 | 0.38 |
| Non-fugitive 1* | - | 0.45 | 0.45 | 0.45 |
| DEOA* | 1.50 | 1.50 | - | - |
| Amidoamine 1* | - | - | 0.50 | - |
| Amidoamine 2* | - | - | - | 0.50 |
| **Ambient conditions** | | | | |
| AirFlow SLM | 54 | 60 | 79 | 57 |
| Elongation at break, % | 104 | 100 | 117 | 110 |
| Tear Strength, N/m | 220 | 214 | 232 | 238 |
| Comp. Set, 50% | 6 | 9 | 9 | 9 |
| **Humid heat aging** | | | | |
| DB HALL, % | -18 | -40 | -24 | -27 |
| DB Elongation at break, % | 149 | Deteriorated[1] | 51 | 156 |
| DB Tensile Strength, KPa | 23 | Deteriorated[1] | 18 | 19 |
| VW HALL, % | -26 | -63 | -30 | -33 |
| VW Elongation at break, % | 133 | 67 | 135 | 132 |
| VW Tensile Strength, KPa | 119 | 58 | 104 | 103 |
| Japanese Wet Set % | 20 | 19 | 21 | 25 |
| HACS, 50% | 10 | 29 | 12 | 11 |
| HACS, 50% DB | 13 | 28 | 19 | - |

[1]Cannot be measured because foam is too fragile to handle.
*pphp

EXAMPLE 2

This example illustrates similar results to those described in Example 1 for higher density polyurethane foams. In this case the polyurethane products made with Amidoamine 1 and Amidoamine 2 in the presence of non-fugitive catalysts had superior performance than those made using DEOA and standard non-fugitive catalysts.

HIGH DENSITY FORMULATION

| | |
|---|---|
| Index (Mondur TD80) | 100 |
| Density, Kg/$m^3$ | 45 |
| Conventional Polyol, pphp | 72.0 |
| SAN Polyol, pphp | 28.0 |
| DC 5169, pphp | 0.60 |
| DC 5164, pphp | 0.20 |
| Water | 2.90 |

FOAM DATA ANALYSIS

| Formulation Example | **2A** | **2B** | **2C** | **2D** |
|---|---|---|---|---|
| Index | 100 | 100 | 100 | 100 |
| Density, $Kg/m^3$ | 45 | 45 | 45 | 45 |
| 33 LV* | 0.32 | - | - | - |
| BL 11* | 0.08 | - | - | - |
| Non-fugitive 3* | - | 0.38 | 0.38 | 0.38 |
| Non-fugitive 1* | - | 0.45 | 0.45 | 0.45 |
| DEOA* | 1.28 | 1.28 | - | - |
| Amidoamine 1* | - | - | 0.50 | - |
| Amidoamine 2* | - | - | - | 0.50 |
| **Ambient conditions** | | | | |
| AirFlow SLM | 83 | 67 | 74 | 66 |
| Elongation at break, % | 114 | 104 | 112 | 120 |
| Tear Strength, N/m | 210 | 194 | 229 | 231 |
| Comp. Set, 50% | 4 | 5 | 8 | 9 |
| **Humid heat aging** | | | | |
| DB HALL, % | -61 | -88 | -65 | -65 |
| DB Elongation at break, % | 72 | 44 | 65 | 63 |
| DB Tensile Strength, KPa | 46 | 13 | 26 | 28 |
| VW HALL, % | -6 | -25 | -20 | -21 |
| VW Elongation at break, % | 175 | 121 | 154 | 148 |
| VW Tensile Strength, KPa | 197 | 100 | 139 | 130 |
| Japanese Wet Set % | 10 | 12 | 18 | 18 |
| HACS, 50% | 8 | 11 | 5 | 5 |
| HACS, 50% DB | 8 | 22 | 5 | 5 |
| HACS, 50% VW | 8 | 10 | 5 | 5 |
| *pphp | | | | |

EXAMPLE 3

This example illustrates similar results to those described in Examples 1 and 2 for low density polyurethane foams. In this case the polyurethane products made with Amidoamine 1 and Amidoamine 2 in the presence of non-fugitive catalysts had superior performance than those made using DEOA and standard non-fugitive catalysts. The example shows the use of a different non-fugitive blowing catalyst 2.

LOW DENSITY FORMULATION

| | |
|---|---|
| Index (Mondur TD80) | 100 |
| Density, $Kg/m^3$ | 31.5 |
| Conventional Polyol, pphp | 72.0 |
| SAN Polyol, pphp | 28.0 |
| DC 5169, pphp | 0.60 |

(continued)

| | |
|---|---|
| DC 5164, pphp | 0.20 |
| Water | 4.10 |

FOAM DATA ANALYSIS

| Formulation Example | **1A** | **5A** | **5E** | **5B** | **5C** |
|---|---|---|---|---|---|
| Index | 100 | 100 | 100 | 100 | 100 |
| Density, Kg/m$^3$ | 31.5 | 31.5 | 31.5 | 31.5 | 31.5 |
| 33 LV* | 0.32 | 0.32 | 0.32 | - | - |
| BL 11* | 0.08 | 0.08 | 0.08 | - | - |
| Non-fugitive 3* | - | - | - | 0.70 | 0.70 |
| Non-fugitive 1* | - | - | - | - | - |
| DEOA* | 1.50 | - | - | 1.50 | - |
| Amidoamine 1* | - | 0.50 | - | - | 0.75 |
| Amidoamine 2* | - | - | 0.50 | | |
| Non-fugitive 2* | - | - | - | 0.12 | 0.12 |
| **Ambient conditions** | | | | | |
| AirFlow SLM | 54 | 41 | 36 | 54 | 58 |
| Elongation at break, % | 104 | 167 | 170 | 115 | 112 |
| Tear Strength, N/m | 220 | 228 | 226 | 173 | 198 |
| Comp. Set, 50% | 6 | 6 | 7 | 9 | 13 |
| **Humid heat aging** | | | | | |
| DB HALL, % | -18 | -32 | -34 | -74 | -46 |
| DB Elongation at break, % | 149 | 118 | 123 | 32 | 64 |
| DB Tensile Strength, KPa | 23 | 9 | 7 | 16 | 32 |
| VW HALL, % | -26 | -11 | -10 | -31 | -23 |
| VW Elongation at break, % | 133 | 164 | 170 | 56 | 96 |
| VW Tensile Strength, KPa | 119 | 128 | 128 | 99 | 132 |
| Jap Wet Set % | 20 | 23 | 21 | - | - |
| HACS, 50% | 10 | 10 | 10 | 30 | 9 |
| HACS, 50% DB | 13 | - | - | 43 | 14 |
| HACS, 50% VW | - | - | - | 29 | 7 |
| *pphp | | | | | |

## Claims

**1.** A composition consisting essentially of a non-fugitive tertiary amine urethane catalyst and a crosslinking additive comprising one or more compounds of the following formulas A and/or B:

an amidoamine of formula A:

$$(RCO)N(R')\text{-}[(CH_2)_m\text{-}NR']_n\text{-}R' \qquad A$$

and
an imidazoline of formula B:

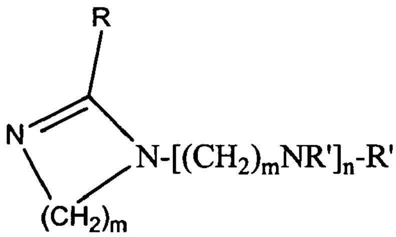

B

where
R is hydrogen, a C1-C35 alkyl, substituted alkyl, alkenyl, substituted alkenyl, aryl, substituted aryl or alkylaryl group; R' each is independently an RCO- acyl group, a hydrogen, a C1-C36 alkyl, substituted alkyl, alkenyl, substituted alkenyl, aryl, substituted aryl or alkylaryl group; ; or when n > 1 in formula B a group the formula:

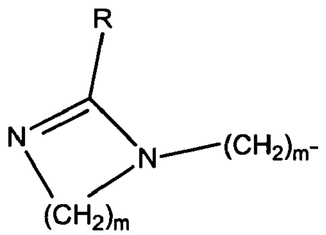

;

m is 2 or 3; and
n is an integer from 1 to 10.

2. The composition of claim 1 wherein the non-fugitive tertiary amine urethane catalyst comprises an isocyanate-reactive group.

3. The composition of claim 1 wherein the amidoamine and/or the imidazoline are the reaction product of a C1-C36 carboxylic acid and a polyethylene or polypropylene polyamine.

4. The composition of claim 2 further comprising a polyester or polyether polyol.

5. The composition of claim 2 wherein the non-fugitive catalyst is selected from the group consisting of gelling catalysts N,N-bis(3-dimethylamino-propyl) N-isopropanolamine; N,N-dimethylaminoethyl-N'-methyl ethanolamine; N,N,N'-trimethylaminopropyl ethanolamine; N,N-dimethylethanolamine; N,N-dimethyl-N',N'-2-hydroxy(propyl)-1,3-propylenediamine; dimethylaminopropylamine; (N,N-dimethylaminoethoxy)ethanol; methylhydroxyethylpiperazine; bis(N,N-dimethyl-3-aminopropyl)amine; N,N-dimethylaminopropyl urea; N,N'-bis(3-dimethylaminopropyl) urea; bis(dimethylamino)-2-propanol; N-(3-aminopropyl)imidazole; N-(2-hydroxypropyl)imidazole; N-(2-hydroxyethyl) imidazole and mixtures thereof.

6. The composition of claim 2 wherein the non-fugitive catalyst is selected from the group consisting of blowing catalysts 2-[N-(dimethylaminoethoxyethyl)-N-methylamino]ethanol; dimethylaminoethoxyethanol; N,N,N'-trimethyl-N'-3-aminopropyl-bis(aminoethyl) ether; N,N,N'-trimethyl-N'-aminopropyl-bis(aminoethyl) ether and mixtures thereof.

7. The composition of claim 1 wherein R is a C6-C17 alkyl or alkenyl group.

8. The composition of claim 3 wherein the carboxylic acid comprises coconut oil fatty acid, soya fatty acid, tall oil fatty acid or dimer acid.

9. The composition of claim 8 wherein the polyamine is diethylenetriamine (DETA), triethylenetetramine (TETA), tetraethylenepentamine (TEPA), or pentaethylenehexamine (PEHA).

10. The composition of claim 3 wherein the crosslinking additive comprises the reaction product of tall oil fatty acids and tetraethylenepentamine (TEPA).

11. The composition of claim 3 wherein the crosslinking additive comprises the reaction product of tall oil fatty acids and triethylenetetramine (TETA).

12. The composition of claim 1 comprising one or more blowing agents.

13. A composition comprising a non-fugitive tertiary amine urethane catalyst, a polyol component consisting of one or more polyols, and a crosslinking additive comprising one or more compounds of the following formulas A1 and/or B1:

an amidoamine of formula A1:

$$(RCO)N(H)\text{-}[(CH_2)_m\text{-}NH]_n\text{-}R' \qquad A1$$

and
an imidazoline of formula B1:

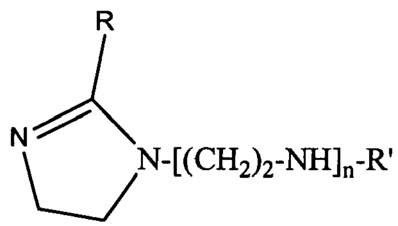

B1

in which
R is a C6-C17 alkyl, substituted alkyl, alkenyl, substituted alkenyl, aryl, substituted aryl or alkylaryl group;
R' is a hydrogen atom, a RCO- acyl group or an imidazole group of the formula:

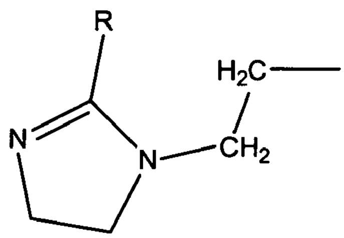

m is 2 or 3; and
n is an integer from 1 to 6 and when n = 1 then R' is hydrogen.

14. The composition of claim 13 wherein the non-fugitive tertiary amine urethane catalyst comprises an isocyanate-reactive group.

15. The composition of claim 13 wherein the amidoamine and/or the imidazoline are the reaction product of a C1-C36 carboxylic acid and a polyethylene or polypropylene polyamine.

16. The composition of claim 15 wherein the carboxylic acid comprises soya fatty acid, coconut oil fatty acid, tall oil fatty acid or dimer acid.

17. The composition of claim 16 wherein the polyamine is diethylenetriamine (DETA), triethylenetetramine (TETA),

tetraethylenepentamine (TEPA), or pentaethylenehexamine (PEHA).

**18.** The composition of claim 13 wherein the crosslinking additive comprises the reaction product of tall oil fatty acids and tetraethylenepentamine (TEPA).

**19.** The composition of claim 13 wherein the crosslinking additive comprises the reaction product of tall oil fatty acids and triethylenetetramine (TETA).

**20.** The composition of claim 13 further comprising one or more blowing agents.

**21.** A method of making a polyurethane foam, the method comprising combining a polyol component, an organic isocyanate, a non-fugitive tertiary amine urethane catalyst, and a crosslinking additive comprising one or more compounds of the following formulas A and/or B:

an amidoamine of formula A:

$$(RCO)N(R')\text{-}[(CH_2)_m\text{-}NR']_n\text{-}R' \qquad A$$

and
an imidazoline of formula B:

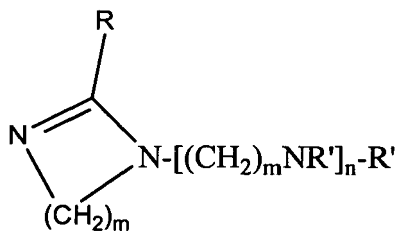

B

where
R is hydrogen, a C1-C35 alkyl, substituted alkyl, alkenyl, substituted alkenyl, aryl, substituted aryl or alkylaryl group;
R' each is independently an RCO- acyl group, a hydrogen, a C1-C36 alkyl, substituted alkyl, alkenyl, substituted alkenyl, aryl, substituted aryl or alkylaryl group; ; or when n > 1 in formula B a group the formula:

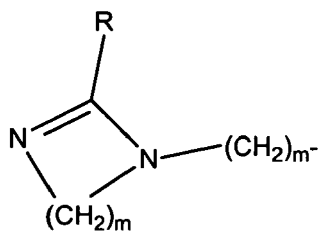

;

m is 2 or 3; and
n is an integer from 1 to 10.

**22.** The method of claim 21 wherein the amidoamine and/or the imidazoline are the reaction product of a monocarboxylic acid and a polyethylene or polypropylene polyamine.

**23.** The method of claim 22 wherein the C1-C36 carboxylic acid comprises soya fatty acid, coconut oil fatty acid, tall oil fatty acid or dimer acid.

**24.** The method of claim 21 wherein the polyamine is diethylenetriamine (DETA), triethylenetetramine (TETA), tetraethylenepentamine (TEPA), or pentaethylenehexamine (PEHA).

**25.** A composition consisting essentially of a non-fugitive tertiary amine urethane catalyst and a crosslinking additive comprising the reaction product of a C1-C36 carboxylic acid and a polyethylene or polypropylene polyamine.

**26.** The composition of claim 25 further comprising a polyester or polyether polyol.

**27.** A method of making a polyurethane foam, the method comprising combining a polyol component, an organic isocyanate, a non-fugitive tertiary amine urethane catalyst, and a crosslinking additive comprising the reaction product of a C1-C36 carboxylic acid and a polyethylene or polypropylene polyamine.

European Patent Office

# EUROPEAN SEARCH REPORT

Application Number
EP 07 00 5828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 435 365 A2 (AIR PROD & CHEM [US]) 7 July 2004 (2004-07-07)<br>* paragraph [0014] *<br>* claims; examples *<br>----- | 1-27 | INV.<br>C08G18/18 |
| X | EP 1 018 526 A1 (CK WITCO CORP [US] GEN ELECTRIC [US]) 12 July 2000 (2000-07-12)<br>* claims; examples *<br>----- | 1-27 | |
| X | US 5 707 702 A (BRADY JR ROBERT F [US] ET AL) 13 January 1998 (1998-01-13)<br>* examples 1-3 *<br>* column 23, line 5 - column 28, line 40 *<br>----- | 1-27 | |
| | | | TECHNICAL FIELDS SEARCHED (IPC) |
| | | | C08G |

The present search report has been drawn up for all claims

1

| Place of search | Date of completion of the search | Examiner |
|---|---|---|
| Munich | 30 July 2007 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 00 5828

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2007

| Patent document cited in search report | Publication date | Patent family member(s) | Publication date |
|---|---|---|---|
| EP 1435365 A2 | 07-07-2004 | AT 364645 T | 15-07-2007 |
| EP 1018526 A1 | 12-07-2000 | CA 2294560 A1 | 05-07-2000 |
| | | CN 1267674 A | 27-09-2000 |
| | | DE 69921284 D1 | 25-11-2004 |
| | | DE 69921284 T2 | 24-02-2005 |
| | | HK 1030004 A1 | 09-12-2005 |
| | | JP 2000204135 A | 25-07-2000 |
| | | KR 20000053377 A | 25-08-2000 |
| | | MX PA00000238 A | 08-03-2002 |
| | | PL 337686 A1 | 17-07-2000 |
| | | US 6660781 B1 | 09-12-2003 |
| US 5707702 A | 13-01-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6258920 B